# EUROPEAN PATENT APPLICATION

(11) **EP 4 832 272 A1**
(43) Date of publication of application: **28.10.2026**
(21) Application number: 25738330.7
(22) Date of filing: 03.01.2025
(51) Int. Cl.: H02B 3/00

(54) **SOLID-STATE TRANSFORMER IN-GRID OPERATIONS AND MAINTENANCE CIRCUIT AND METHOD THEREFOR, CONTROLLER, AND STORAGE MEDIUM**

(30) Priority: 09.01.2024 CN 202410039187
(71) Applicant: ZTE CORPORATION, Shenzhen, Guangdong 518057 (CN)
(72) Inventor: AN, Yu, Shenzhen, Guangdong 518057 (CN); LV, Da, Shenzhen, Guangdong 518057 (CN); YU, Xuejin, Shenzhen, Guangdong 518057 (CN); WANG, Ermin, Shenzhen, Guangdong 518057 (CN); SONG, Tianhao, Shenzhen, Guangdong 518057 (CN); SONG, Bao, Shenzhen, Guangdong 518057 (CN)
(74) Representative: Chimini, Francesco
(86) International application number: PCT/CN2025/070450
(87) International publication number: WO 2025/148799

(57) **Abstract**

Provided are a circuit for in-service operation and maintenance of a solid-state transformer, and a method therefor, a controller and a storage medium, including a solid-state transformer unit, an input-side switch, an output-side switch, and an auxiliary charging circuit, wherein an input side of the solid-state transformer unit is connected to an input busbar, and an output side of the solid-state transformer unit is connected to an output busbar; the input-side switch is disposed at the input side of the solid-state transformer unit, and the output-side switch is disposed at the output side of the solid-state transformer unit; one solid-state transformer unit corresponds to one input-side switch and one output-side switch; and a voltage output end of the auxiliary charging circuit is connected between the solid-state transformer unit and the output-side switch. When the solid-state transformer units need repair or replacement, the input-side switches and the output-side switches of a part of the solid-state transformer units may be opened, and since the system capacity is reduced to a small extent, the system can still operate normally; in addition, the solid-state transformer units are charged by the auxiliary charging circuit, so that the input and output of the units are restored without impact.

## Description

### Cross-Reference to Related Application

The present disclosure is based upon and claims the benefit of priority of Chinese Patent Publication 202410039187X, filed on 9 January 2024, entitled "Circuit for In-Service Operation and Maintenance of Solid-State Transformer, and Method therefor, Controller and Storage Medium", the disclosure of which is incorporated herein by reference in its entirety.

### Technical Field

Embodiments of the present disclosure relate to the technical field of transformer power distribution, and in particular, to a circuit for in-service operation and maintenance of a solid-state transformer, and a method therefor, a controller and a storage medium.

### Background

In the related art, in the field of data centers and power distribution, a power supply system is required to have a high-reliability operation capability, and in-service operation and maintenance of equipment is one of the key technologies for improving operation reliability. However, since a solid-state transformer involves a medium-voltage system and power electronic modules, there is currently no good in-service operation and maintenance solution therefor, resulting in affected reliable operation.

### Summary

Embodiments of the present disclosure provide a circuit for in-service operation and maintenance of a solid-state transformer, and a method therefor, a controller and a storage medium.

According to a first aspect, an embodiment of the present disclosure provides a circuit for in-service operation and maintenance of a solid-state transformer, including: a solid-state transformer unit having an input side configured to be connected to an input busbar and an output side configured to be connected to an output busbar; an input-side switch and an output-side switch, wherein the input-side switch is disposed between the input side of the solid-state transformer unit and the input busbar, and the output-side switch is disposed between the output side of the solid-state transformer unit and the output busbar; wherein a plurality of the solid-state transformer units, a plurality of the input-side switches and a plurality of the output-side switches are provided, and one solid-state transformer unit corresponds to one input-side switch and one output-side switch; and an auxiliary charging circuit, wherein a voltage output end of the auxiliary charging circuit is connected between the solid-state transformer unit and the output-side switch, and the auxiliary charging circuit is configured to charge the solid-state transformer unit.

According to a second aspect, an embodiment of the present disclosure provides a method for in-service operation and maintenance of a solid-state transformer, applied to the circuit for in-service operation and maintenance of a solid-state transformer according to the first aspect, the method including: receiving an operation-and-maintenance shutdown instruction, and determining a corresponding target solid-state transformer unit according to the operation-and-maintenance shutdown instruction; opening the input-side switch and the output-side switch corresponding to the target solid-state transformer unit, to control the target solid-state transformer unit to shut down, and maintaining power supply to a load through the solid-state transformer units other than the target solid-state transformer unit; and controlling the auxiliary charging circuit to charge the target solid-state transformer unit, closing the input-side switch and closing the output-side switch, after the target solid-state transformer unit completes operation and maintenance.

According to a third aspect, an embodiment of the present disclosure provides a controller, including: at least one processor; and at least one memory configured to store at least one program; wherein at least one of the programs, when executed by at least one of the processors, performs the method for in-service operation and maintenance of a solid-state transformer according to the second aspect.

According to a fourth aspect, an embodiment of the present disclosure provides a computer-readable storage medium, having a processor-executable program stored therein, wherein the processor-executable program, when executed by a processor, performs the method for in-service operation and maintenance of a solid-state transformer according to the second aspect.

According to a fifth aspect, an embodiment of the present disclosure provides a computer program product, including a computer program or computer instructions, wherein the computer program or the computer instructions are stored in a computer-readable storage medium, and a processor of a computer device reads the computer program or the computer instructions from the computer-readable storage medium, and the processor executes the computer program or the computer instructions, to cause the computer device to perform the method for in-service operation and maintenance of a solid-state transformer according to the second aspect.

### Brief Description of the Drawings

FIG. 1 is a schematic structural diagram of a circuit for in-service operation and maintenance of a solid-state transformer according to an embodiment of the present disclosure;
FIG. 2 is a schematic structural diagram of a circuit for in-service operation and maintenance of a solid-state transformer according to another embodiment of the present disclosure;
FIG. 3 is a schematic structural diagram of a circuit for in-service operation and maintenance of a solid-state transformer according to another embodiment of the present disclosure;
FIG. 4 is a schematic structural diagram of a bridge-type isolation module in a circuit for in-service operation and maintenance of a solid-state transformer according to an embodiment of the present disclosure;
FIG. 5 is a flowchart of steps of a method for in-service operation and maintenance of a solid-state transformer according to an embodiment of the present disclosure;
FIG. 6 is a flowchart of steps of a method for in-service operation and maintenance of a solid-state transformer according to another embodiment of the present disclosure;
FIG. 7 is a flowchart of steps of a method for in-service operation and maintenance of a solid-state transformer according to another embodiment of the present disclosure;
FIG. 8 is a flowchart of steps of a method for in-service operation and maintenance of a solid-state transformer according to another embodiment of the present disclosure;
FIG. 9 is a flowchart of steps of a method for in-service operation and maintenance of a solid-state transformer according to another embodiment of the present disclosure; and
FIG. 10 is a schematic structural diagram of a controller configured to perform a method for in-service operation and maintenance of a solid-state transformer according to an embodiment of the present disclosure.

### Detailed Description of the Embodiments

In order to make the objectives, technical solutions and advantages of the present disclosure more apparent, the present disclosure will be further described in detail below with reference to the accompanying drawings and embodiments. It should be understood that the specific embodiments described herein are only intended to explain the present disclosure, and are not intended to limit the present disclosure.

It should be noted that although functional module divisions are made in the schematic diagrams of the apparatuses, and logical sequences are shown in the flowcharts, in some cases, the shown or described steps may be performed in a module division different from that in the apparatuses or in a sequence different from that in the flowcharts. The terms "first", "second" and the like in the description, the claims and the above drawings are used to distinguish similar objects, and are not necessarily used to describe a specific order or sequence.

In the embodiments of the present disclosure, terms such as "further", "exemplarily" or "optionally" are used to indicate serving as an example, instance or illustration, and should not be construed as being more preferred or having more advantages than other embodiments or design solutions. The use of terms such as "further", "exemplarily" or "optionally" is intended to present related concepts in a specific manner.

In some cases, in the field of data centers and power distribution, a power supply system is required to have a high-reliability operation capability, and in-service operation and maintenance of equipment is one of the key technologies for improving operation reliability. However, since a solid-state transformer (SST) involves a medium-voltage system and power electronic modules, there is currently no good in-service operation and maintenance solution therefor, resulting in affected reliable operation.

At present, in the prior art, a power supply system of a data center adopts a power supply and distribution system based on an uninterruptible power supply (UPS). The UPS is composed of a plurality of power modules connected in parallel to supply power to a load. In order to achieve in-service operation and maintenance, the UPS adopts a maintenance bypass to achieve maintenance of the load without power interruption. The working principle thereof is that during maintenance, the maintenance bypass is closed, the load is powered by the utility power provided by the maintenance bypass, the input and output switches of the UPS modules are opened to achieve voltage isolation, and the UPS performs operation and maintenance work under such a condition. After the maintenance is completed, the UPS achieves impact-free grid reconnection by using a phase-locking technique, completes load transfer, and then opens the maintenance bypass to restore to an original state. Therefore, in-service operation and maintenance needs to solve two problems: module voltage isolation and impact-free restoration.

With the development of power electronics and power distribution technologies, the solid-state transformer has been introduced into the power supply system of data centers. When the solid-state transformer is in operation and maintenance, the output will stop supplying power, which fails to meet the power supply reliability index. In this regard, a conventional solution is to add an additional power supply path, stop the operation of the solid-state transformer during maintenance, and switch to a backup circuit, so as to achieve operation and maintenance of the solid-state transformer with power interruption. However, such a solution requires configuring a backup power supply system with the same capacity as the solid-state transformer, which has the disadvantages of high cost and large footprint.

Based on the above circumstances, the embodiments of the present disclosure provide a solution capable of achieving in-service operation and maintenance of a solid-state transformer, which solves the core problems of in-service operation and maintenance such as a power transmission bypass path, power module isolation and impact-free restoration, reduces costs, and improves equipment reliability.

The following is a further description of various embodiments of the circuit for in-service operation and maintenance of a solid-state transformer according to the embodiments of the present disclosure with reference to the accompanying drawings.

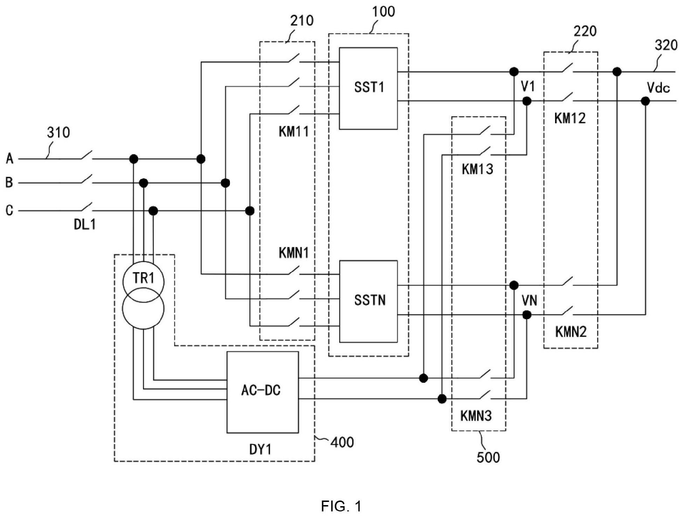

As shown in FIG. 1, FIG. 1 is a schematic structural diagram of a circuit for in-service operation and maintenance of a solid-state transformer according to an embodiment of the present disclosure.

In one embodiment, the circuit for in-service operation and maintenance of a solid-state transformer includes, but is not limited to, solid-state transformer units 100, input-side switches 210, output-side switches 220 and an auxiliary charging circuit, wherein a plurality of the solid-state transformer units 100, a plurality of the input-side switches 210 and a plurality of the output-side switches 220 are provided, and one solid-state transformer unit 100 corresponds to one input-side switch 210 and one output-side switch 220.

Specifically, the input side of each solid-state transformer unit 100 is connected to an input busbar 310 via the input-side switch 210, and the output side of each solid-state transformer unit 100 is connected to an output busbar 320 via the output-side switch 220; a voltage output end of the auxiliary charging circuit is respectively connected between each solid-state transformer unit 100 and each output-side switch 220, and is configured to charge each solid-state transformer unit 100.

It should be noted that the above-mentioned solid-state transformer unit 100 refers to a solid-state transformer, wherein the solid-state transformer is a modern electric power device capable of providing bidirectional power flow. It is a static power apparatus that combines power electronic conversion technology and high-frequency electric energy conversion technology based on the principle of electromagnetic induction. The SST integrates functions such as electrical isolation, voltage conversion, and reactive power compensation, and can improve the intelligence level of power grid equipment through the integration of traditional transformers and power electronic devices.

In one embodiment, the voltage at the input side of the solid-state transformer unit 100, i.e., the input busbar 310, is an alternating-current voltage; the voltage at the output side of the solid-state transformer unit 100, i.e., the output busbar 320, is a direct-current voltage.

It is worth noting that since the circuit for in-service operation and maintenance of a solid-state transformer according to the embodiments of the present disclosure is composed of a plurality of solid-state transformer units 100 connected in parallel, when some of the solid-state transformer units 100 need repair or replacement, the embodiments of the present disclosure can open the input-side switches 210 and the output-side switches 220 of a part of the solid-state transformer units 100, and since the system capacity is reduced to a small extent, the system can still operate normally; in addition, the embodiments of the present disclosure can also charge the solid-state transformer units 100 through the auxiliary charging circuit, so that the input and output of the solid-state transformer units 100 can be restored without impact. Therefore, the embodiments of the present disclosure can achieve in-service operation and maintenance of the solid-state transformer, and can also ensure the reliability of the in-service operation and maintenance of the solid-state transformer.

In one embodiment, the auxiliary charging circuit includes, but is not limited to, an operation-and-maintenance voltage output device 400 and an operation-and-maintenance switch 500, one end of the operation-and-maintenance switch 500 is connected to the operation-and-maintenance voltage output device 400, and the other end of the operation-and-maintenance switch 500 is connected between the solid-state transformer unit 100 and the output-side switch 220, wherein a plurality of the operation-and-maintenance switches 500 are provided, and one operation-and-maintenance switch 500 corresponds to one solid-state transformer unit 100.

Specifically, in order to supply power to the solid-state transformer unit 100 after the solid-state transformer unit 100 is repaired or replaced, the embodiments of the present disclosure are correspondingly provided with the operation-and-maintenance voltage output device 400, and output a voltage to the solid-state transformer unit 100 through the operation-and-maintenance voltage output device 400; in addition, during the repair or replacement of the solid-state transformer unit 100, the operation-and-maintenance switch 500 needs to be opened; after the repair or replacement of the solid-state transformer unit 100 is completed, the operation-and-maintenance switch 500 needs to be closed to supply power to the solid-state transformer unit 100.

It should be noted that the above-mentioned operation-and-maintenance voltage output device 400 may include, but is not limited to, the following three structural forms, which are respectively as follows:
In a first structural form, as shown in FIG. 1, the operation-and-maintenance voltage output device 400 includes, but is not limited to, a power-taking transformer TR1 and a first voltage converter DY1, an input end of the power-taking transformer TR1 is configured to be connected to the input busbar 310, an output end of the power-taking transformer TR1 is connected to the plurality of operation-and-maintenance switches 500 via the first voltage converter DY1, and the first voltage converter DY1 is configured to convert an alternating-current voltage into a direct-current voltage.

Specifically, in the embodiments of the present disclosure, alternating current can be obtained from the input busbar 310 and output through the power-taking transformer TR1, and the alternating current is transmitted to the input side of the first voltage converter DY1; then, the first voltage converter DY1 converts the alternating current into direct current, and supplies the direct current to the solid-state transformer units 100 through the operation-and-maintenance switches 500.

It should be noted that the power-taking transformer TR1 is a special transformer, and its main function is to obtain electric energy from a power system and supply it to a load after conversion. The power-taking transformer TR1 generally has functions such as voltage conversion, electrical isolation, and power transmission, and is widely used in various power systems and electronic devices.

In addition, it should be noted that both the input side and the output side of the power-taking transformer TR1 are alternating current, wherein the power-taking transformer TR1 may adjust the amplitude of the alternating current, or may not adjust it, that is, the alternating-current voltage at the input side of the power-taking transformer TR1 may be equal to the alternating-current voltage at the output side of the power-taking transformer TR1, or may not be equal to the alternating-current voltage at the output side of the power-taking transformer TR1, which is not specifically limited in the embodiments of the present disclosure.

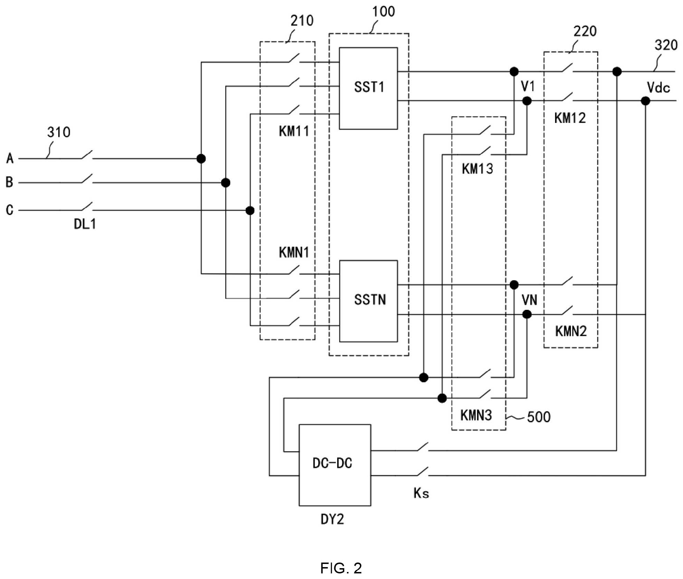

In a second structural form, as shown in FIG. 2, FIG. 2 is a schematic structural diagram of a circuit for in-service operation and maintenance of a solid-state transformer according to another embodiment of the present disclosure. The operation-and-maintenance voltage output device 400 includes, but is not limited to, a second voltage converter DY2, an input end of the second voltage converter DY2 is configured to be connected to the output busbar 320, an output end of the second voltage converter DY2 is connected to the plurality of operation-and-maintenance switches 500, and the second voltage converter DY2 is configured to convert a voltage value of a direct-current voltage of the output busbar 320.

Specifically, in the embodiments of the present disclosure, direct current can be obtained from the output busbar 320 through the second voltage converter DY2, then the voltage value of the direct current is converted, and the converted direct current is supplied to the solid-state transformer units 100 through the operation-and-maintenance switches 500.

In one embodiment, as shown in FIG. 2, the operation-and-maintenance voltage output device 400 further includes, but is not limited to, an operation-and-maintenance power supply switch Ks, one end of the operation-and-maintenance power supply switch Ks is connected to the output busbar 320, and the other end of the operation-and-maintenance power supply switch Ks is connected to the second voltage converter DY2.

Specifically, when the second voltage converter DY2 is required to supply power, the operation-and-maintenance power supply switch Ks may be closed, so that the second voltage converter DY2 can obtain direct current from the output busbar 320; when the second voltage converter DY2 is not required to supply power, the operation-and-maintenance power supply switch Ks may be opened.

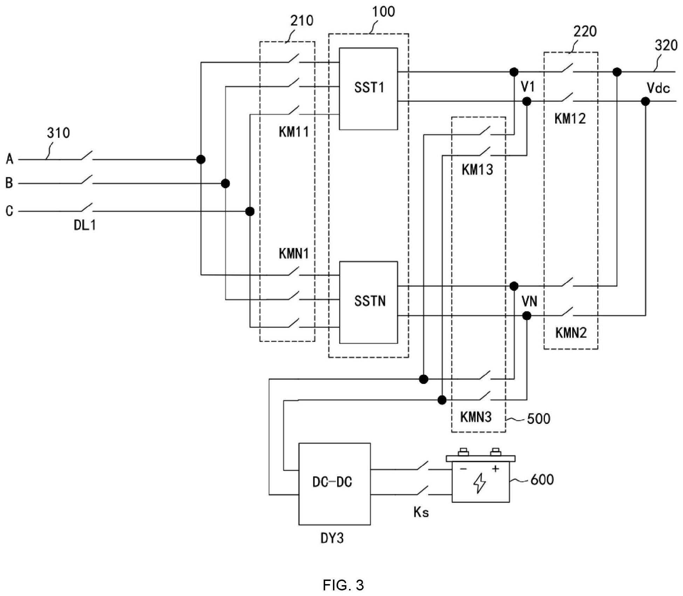

In a third structural form, as shown in FIG. 3, FIG. 3 is a schematic structural diagram of a circuit for in-service operation and maintenance of a solid-state transformer according to another embodiment of the present disclosure. The operation-and-maintenance voltage output device 400 includes, but is not limited to, a power supply battery 600 and a third voltage converter DY3, an input end of the third voltage converter DY3 is connected to the power supply battery 600, an output end of the third voltage converter DY3 is connected to the plurality of operation-and-maintenance switches 500, and the third voltage converter DY3 is configured to convert a voltage value of a direct-current voltage of the power supply battery 600.

Specifically, in the embodiments of the present disclosure, a power supply battery 600 may be additionally provided, direct current is obtained from the power supply battery 600 through the third voltage converter DY3, then the voltage value of the direct current is converted, and the converted direct current is supplied to the solid-state transformer units 100 through the operation-and-maintenance switches 500.

In one embodiment, as shown in FIG. 3, the operation-and-maintenance voltage output device 400 further includes, but is not limited to, an operation-and-maintenance power supply switch Ks, one end of the operation-and-maintenance power supply switch Ks is connected to the power supply battery 600, and the other end of the operation-and-maintenance power supply switch Ks is connected to the third voltage converter DY3.

Specifically, when the third voltage converter DY3 is required to supply power, the operation-and-maintenance power supply switch Ks may be closed, so that the third voltage converter DY3 can obtain direct current from the power supply battery 600; when the third voltage converter DY3 is not required to supply power, the operation-and-maintenance power supply switch Ks may be opened.

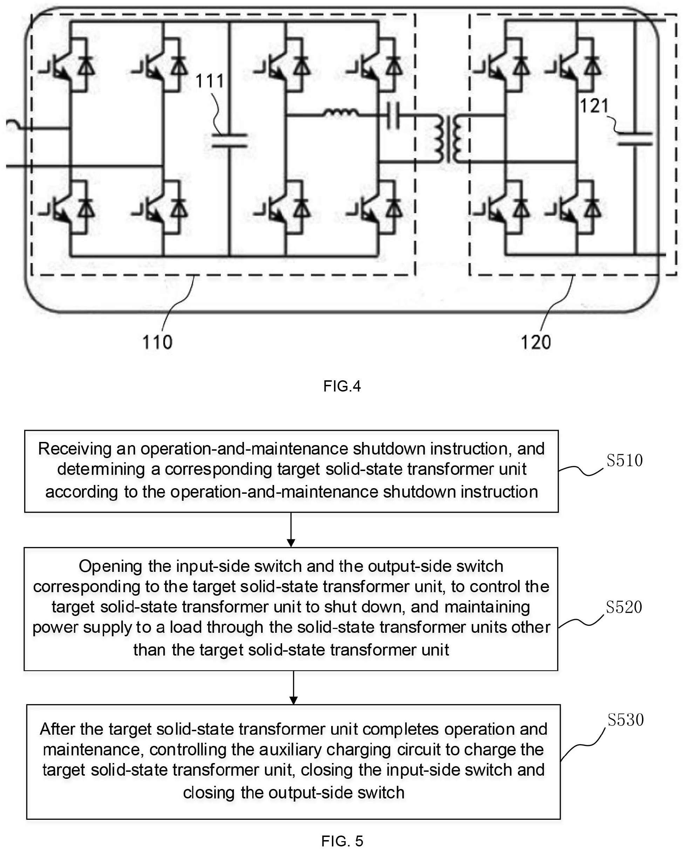

In one embodiment, as shown in FIG. 4, FIG. 4 is a schematic structural diagram of a bridge-type isolation module in a circuit for in-service operation and maintenance of a solid-state transformer according to an embodiment of the present disclosure. The solid-state transformer unit 100 includes, but is not limited to, a bridge-type isolation module, the bridge-type isolation module includes, but is not limited to, a high-voltage-side cascade module 110 and a low-voltage-side cascade module 120, the high-voltage-side cascade module 110 is provided with a high-voltage-side capacitor 111, the low-voltage-side cascade module 120 is provided with a low-voltage-side capacitor 121, the high-voltage-side capacitor 111 is connected to the input-side switch 210, and the low-voltage-side capacitor 121 is connected to the output-side switch 220 and the operation-and-maintenance switch 500.

Based on the hardware structures of the circuit for in-service operation and maintenance of a solid-state transformer according to the above various embodiments, overall embodiments of the circuit for in-service operation and maintenance of a solid-state transformer according to the embodiments of the present disclosure are respectively proposed below.

In one embodiment, an SST complete machine is designed to be composed of N SST units connected in parallel, and switches are added to the input and output of each SST unit to achieve voltage isolation and to achieve no power interruption at the overall input and output; an in-service operation and maintenance loop is designed to enable power acquisition for all isolated branches. As shown in FIGS. 1 to 4, the SST complete machine is changed from a whole to a plurality of units connected in parallel, for example, composed of SST1 to SSTN, totaling N units. When SSTN needs operation and maintenance, KMN1 and KMN2 are opened, and since the input and output are disconnected, the unit SSTN will be electrically isolated and can be operated and maintained. Since the overall system has a plurality of branches connected in parallel, the operation of the system will not be affected. After the operation and maintenance are completed, the auxiliary charging circuit can be used to complete the impact-free restoration of the overall system.

Specifically, as shown in FIGS. 1 to 4, if SSTN needs operation and maintenance, SSTN is shut down, KMN1 and KMN2 are opened, and modules are replaced. After the replacement is completed, KMN3 is closed, a voltage is output, and the low-voltage-side capacitor of SSTN is charged. After the charging of the low-voltage-side capacitor of SSTN is completed, the SST is started internally to charge the high-voltage-side capacitor of SSTN, and when the voltage value of the high-voltage-side capacitor exceeds the peak voltage of the power grid, KMN1 is closed. Since the voltage of the high-voltage-side capacitor is higher than the voltage of the power grid, impact-free grid connection is achieved, and the problem of impact of medium-voltage grid connection is solved. Such current impact would affect the design of SST1 and the like still in operation, and in severe cases would cause system tripping, making it impossible to achieve in-service maintenance. After KMN1 is closed, KMN3 is opened, and SSTN starts to establish an output voltage. The voltage VN established by SSTN is adjusted, and when the voltage difference between VN and the existing output voltage Vdc is less than a specified value, KMN2 is closed. Since the voltage difference between VN and Vdc is very small, impact-free grid connection of the output is achieved. After the above process is completed, SSTN returns to a normal state, achieving in-service operation and maintenance, and the overall operation and maintenance process does not affect the load operation.

Based on the above embodiments, the technical solutions of the embodiments of the present disclosure include, but are not limited to, the following technical effects:
First, by opening the input and output of a part of the SSTs, the system output capacity is only reduced by 1/N, the output can still operate normally, the system backup capacity is reduced to 1/N of the system capacity, and both the input and output are restored without impact, without affecting the load operation, so the cost of the backup system is low.

Second, since the operation and maintenance loop only charges the capacitors, the capacity required thereby is very small, generally only less than 2% of the capacity of a single SST unit, and each branch can be charged through the multi-channel switches, so the capacity of the auxiliary loop is only 1/(50N) of the system capacity, and the circuit implementation cost is low.

Based on the circuit for in-service operation and maintenance of a solid-state transformer according to the above various embodiments, various embodiments of the method for in-service operation and maintenance of a solid-state transformer according to the embodiments of the present disclosure are respectively proposed below.

As shown in FIG. 5, FIG. 5 is a flowchart of a method for in-service operation and maintenance of a solid-state transformer according to an embodiment of the present disclosure. The method for in-service operation and maintenance of a solid-state transformer can be applied to the circuit for in-service operation and maintenance of a solid-state transformer according to the above embodiments, and includes, but is not limited to, step S510, step S520 and step S530.

Step S510: receiving an operation-and-maintenance shutdown instruction, and determining a corresponding target solid-state transformer unit according to the operation-and-maintenance shutdown instruction.

Step S520: opening the input-side switch and the output-side switch corresponding to the target solid-state transformer unit, to control the target solid-state transformer unit to shut down, and maintaining power supply to a load through the solid-state transformer units other than the target solid-state transformer unit.

Step S530: after the target solid-state transformer unit completes operation and maintenance, controlling the auxiliary charging circuit to charge the target solid-state transformer unit, closing the input-side switch and closing the output-side switch.

In one embodiment, first, after receiving the operation-and-maintenance shutdown instruction corresponding to the target solid-state transformer unit, the embodiments of the present disclosure open the input-side switch and the output-side switch corresponding to the target solid-state transformer unit, so that the target solid-state transformer unit is de-energized and can be operated and maintained; at the same time, the solid-state transformer units other than the target solid-state transformer unit need to be kept running to maintain power supply to the load; after the target solid-state transformer unit completes repair or replacement, the target solid-state transformer unit can be charged through the auxiliary charging circuit first, and then the input-side switch and the output-side switch are closed in sequence, thereby achieving impact-free grid connection of the output and input of the target solid-state transformer unit.

It is worth noting that since the circuit for in-service operation and maintenance of a solid-state transformer according to the embodiments of the present disclosure is composed of a plurality of solid-state transformer units connected in parallel, when some of the solid-state transformer units need repair or replacement, the embodiments of the present disclosure can open the input-side switches and the output-side switches of a part of the solid-state transformer units, and since the system capacity is reduced to a small extent, the system can still operate normally; in addition, the embodiments of the present disclosure can also charge the solid-state transformer units through the auxiliary charging circuit, so that the input and output of the solid-state transformer units can be restored without impact. Therefore, the embodiments of the present disclosure can achieve in-service operation and maintenance of the solid-state transformer, and can also ensure the reliability of the in-service operation and maintenance of the solid-state transformer.

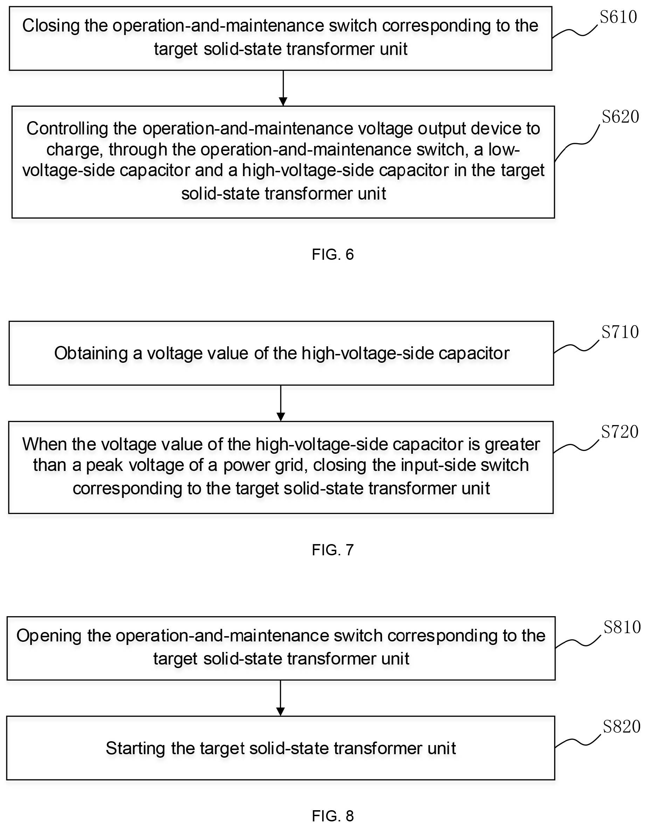

In addition, as shown in FIG. 6, FIG. 6 is a flowchart of a method for in-service operation and maintenance of a solid-state transformer according to another embodiment of the present disclosure; regarding controlling the auxiliary charging circuit to charge the target solid-state transformer unit in the above step S530, the method includes, but is not limited to, step S610 and step S620.

Step S610: closing the operation-and-maintenance switch corresponding to the target solid-state transformer unit.

Step S620: controlling the operation-and-maintenance voltage output device to charge, through the operation-and-maintenance switch, a low-voltage-side capacitor and a high-voltage-side capacitor in the target solid-state transformer unit.

In one embodiment, after the target solid-state transformer unit completes repair or replacement, the operation-and-maintenance switch corresponding to the target solid-state transformer unit may be closed, and the low-voltage-side capacitor in the target solid-state transformer unit is charged first through the auxiliary charging circuit; since the bridge-type isolation module has bidirectional energy flow capability, its high-voltage-side capacitor can obtain energy from the low-voltage-side capacitor, therefore, the auxiliary charging circuit can indirectly charge the high-voltage-side capacitor in the target solid-state transformer unit; then, the input-side switch and the output-side switch are closed in sequence, thereby achieving impact-free grid connection of the output and input of the target solid-state transformer unit.

In addition, as shown in FIG. 7, FIG. 7 is a flowchart of a method for in-service operation and maintenance of a solid-state transformer according to another embodiment of the present disclosure; regarding closing the input-side switch in the above step S530, the method includes, but is not limited to, step S710 and step S720.

Step S710: obtaining a voltage value of the high-voltage-side capacitor.

Step S720: when the voltage value of the high-voltage-side capacitor is greater than a peak voltage of a power grid, closing the input-side switch corresponding to the target solid-state transformer unit.

In one embodiment, for the specific process of closing the input-side switch described above, in order to achieve impact-free grid connection of the input of the target solid-state transformer unit, it is necessary to first obtain the voltage value of the high-voltage-side capacitor, and then compare the voltage value of the high-voltage-side capacitor with the peak voltage of the power grid; if the voltage value of the high-voltage-side capacitor is greater than the peak voltage of the power grid, the corresponding input-side switch can be closed, thereby achieving impact-free grid connection of the input of the target solid-state transformer unit.

In addition, as shown in FIG. 8, FIG. 8 is a flowchart of a method for in-service operation and maintenance of a solid-state transformer according to another embodiment of the present disclosure; after the above step S720, the method for in-service operation and maintenance of a solid-state transformer according to the embodiments of the present disclosure further includes, but is not limited to, step S810 and step S820.

Step S810: opening the operation-and-maintenance switch corresponding to the target solid-state transformer unit.

Step S820: starting the target solid-state transformer unit.

In one embodiment, after the input-side switch is closed, the corresponding operation-and-maintenance switch may be opened, and the target solid-state transformer unit is started, so as to start establishing an output voltage.

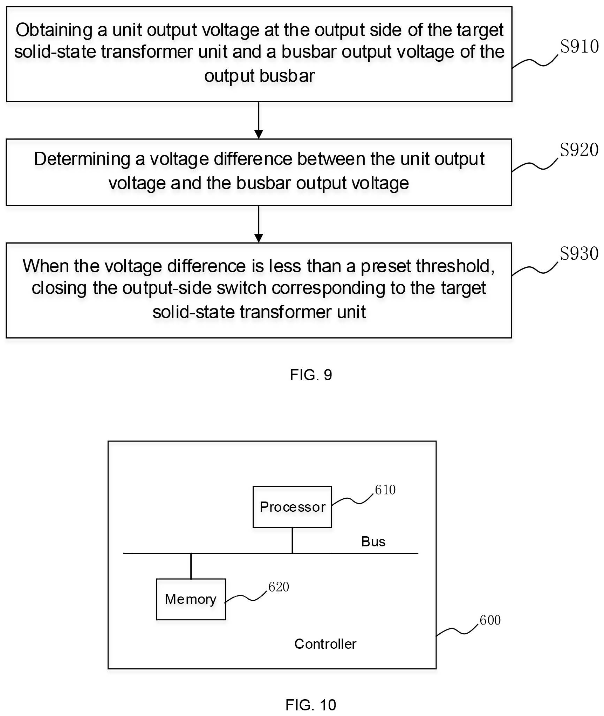

In addition, as shown in FIG. 9, FIG. 9 is a flowchart of a method for in-service operation and maintenance of a solid-state transformer according to another embodiment of the present disclosure; regarding closing the output-side switch in the above step S530, the method includes, but is not limited to, step S910, step S920 and step S930.

Step S910: obtaining a unit output voltage at the output side of the target solid-state transformer unit and a busbar output voltage of the output busbar.

Step S920: determining a voltage difference between the unit output voltage and the busbar output voltage.

Step S930: when the voltage difference is less than a preset threshold, closing the output-side switch corresponding to the target solid-state transformer unit.

In one embodiment, for the specific process of closing the output-side switch described above, in order to achieve impact-free grid connection of the output of the target solid-state transformer unit, it is necessary to first obtain the unit output voltage at the output side of the target solid-state transformer unit and the busbar output voltage of the output busbar, then compare the unit output voltage with the busbar output voltage, and calculate the voltage difference therebetween; if the voltage difference is less than the preset threshold, that is, when the magnitude of the voltage difference is not large, the corresponding output-side switch can be closed, thereby achieving impact-free grid connection of the output of the target solid-state transformer unit.

Based on the method for in-service operation and maintenance of a solid-state transformer according to the above various embodiments, overall embodiments of the method for in-service operation and maintenance of a solid-state transformer according to the embodiments of the present disclosure are respectively proposed below.

In one embodiment, as shown in FIG. 1, the introduction of each component of the circuit for in-service operation and maintenance of a solid-state transformer is as follows:
SST1-SSTN are a plurality of SST units connected in parallel, are composed of a plurality of SST modules connected in cascade, and are configured to convert medium-voltage alternating current to low-voltage direct current; KM11-KMN1 are medium-voltage alternating-current switches, configured to control whether to open the alternating-current input of each group of SST units; KM12-KMN2 are low-voltage direct-current switches, configured to control whether to open the direct-current output of each group of SST units; KM13-KMN3 are operation-and-maintenance switches, configured to control charging of capacitors for a required loop; V1-VN are voltage detection loops, configured to detect the output voltage of each SST unit; TR1 is a power-taking transformer of the operation and maintenance loop, configured to take power from the medium voltage; DY1 is a power supply of the operation and maintenance loop, that is, the first voltage converter, configured to convert alternating current into direct current.

In one embodiment, taking SSTN as an example, the steps of in-service operation and maintenance are as follows:
1. Normal operation: during normal operation, a plurality of SSTs are connected in parallel to supply power to the load.
2. Shutdown of unit SSTN: according to operation and maintenance requirements, the SST unit that needs operation and maintenance is shut down, and an instruction is sent to open the input switch KMN1 and the output switch KMN2, to achieve input and output shutdown of the unit. Since the SST as a whole is composed of a plurality of units, the shutdown of the SST unit does not affect the output, and the load can operate normally.
3. Module replacement in SSTN: the module in SSTN that needs operation and maintenance is replaced.
4. Starting of auxiliary power supply DY1: the auxiliary power supply switch KMN3 is closed, and the auxiliary power supply rectifier DY1 is started to establish a direct-current voltage.
5. Charging of the high-voltage-side capacitor of the SST unit: according to the topology of the SST unit, the unit is composed of a high-frequency isolation module, the circuit of which is shown in FIG. 4, and the low-voltage-side capacitor is charged by the output of DY1; the cascaded H-bridge side is started, and since the high-frequency isolation module has bidirectional energy flow capability, its high-voltage-side capacitor can obtain energy from the low-voltage-side capacitor. Because both the AC and DC switches are opened at this time, the required charging energy is very small. When the voltage value of the capacitor of the high-voltage-side cascade module exceeds the peak voltage of the power grid, the charging process ends.
6. Closing of the medium-voltage switch KMN1 of the SSTN unit: after the charging is completed, low-voltage waveform self-test is performed on the unit system (traditional self-test requires the high-voltage system to be powered on), and since the high-voltage side is not connected to the power grid, failure of the waveform self-test will not impact the power grid. After the self-test is completed, since the sum of the voltage capacities of the cascade modules of the SST unit exceeds the peak voltage of the power grid, impact-free grid connection can be achieved, and at this time the medium-voltage switch KMN1 can be closed, and impact-free grid connection can be achieved.
7. Shutdown of auxiliary power supply DY1: after the medium-voltage-side switch KMN1 of the SSTN unit is closed, the auxiliary power supply DY1 is shut down, and the auxiliary power supply output switch KMN3 is opened.
8. Starting of SSTN unit: after the auxiliary power supply is opened, the SSTN unit is started.
9. Impact-free grid connection on the direct-current side: the established voltage VN is adjusted, VN is compared with the existing output busbar voltage Vdc, and when the voltage difference is less than a set value, KMN2 is closed. Since the voltage difference between VN and Vdc is very small, impact-free grid connection of the output is achieved.

After the above operation steps are completed, SSTN resumes operation, and the SST complete machine completes in-service operation and maintenance.

Based on the method for in-service operation and maintenance of a solid-state transformer according to the above various embodiments, various embodiments of the controller, the solid-state transformer system, the power supply system, the computer-readable storage medium and the computer program product according to the embodiments of the present disclosure are respectively proposed below.

As shown in FIG. 10, FIG. 10 is a schematic structural diagram of a controller configured to perform a method for in-service operation and maintenance of a solid-state transformer according to an embodiment of the present disclosure. The controller 600 of the present disclosure includes: a processor 610, a memory 620, and a computer program stored in the memory 620 and executable on the processor 610, wherein FIG. 10 takes one processor 610 and one memory 620 as an example.

The processor 610 and the memory 620 may be connected via a bus or other means, and FIG. 10 takes connection via a bus as an example.

The memory 620, as a non-transitory computer-readable storage medium, may be configured to store non-transitory software programs and non-transitory computer-executable programs. In addition, the memory 620 may include a high-speed random access memory, and may also include a non-transitory memory, such as at least one magnetic disk storage device, a flash memory device, or other non-transitory solid-state storage devices. In some implementations, the memory 620 may optionally include memories 620 disposed remotely relative to the processor 610, and these remote memories 620 may be connected to the controller 600 via a network. Examples of the above network include, but are not limited to, the Internet, an intranet, a local area network, a mobile communication network, and combinations thereof.

Those skilled in the art can understand that the device structure shown in FIG. 10 does not constitute a limitation on the controller 600, and may include more or fewer components than shown, or combine some components, or have different component arrangements.

In the controller 600 shown in FIG. 10, the processor 610 may be configured to call the program for in-service operation and maintenance of a solid-state transformer stored in the memory 620, thereby implementing the above method for in-service operation and maintenance of a solid-state transformer. Specifically, the non-transitory software programs and instructions required for implementing the method for in-service operation and maintenance of a solid-state transformer according to the above embodiments are stored in the memory 620, and when executed by the processor 610, the above method for in-service operation and maintenance of a solid-state transformer according to the above embodiments is executed.

It is worth noting that since the controller 600 according to the embodiments of the present disclosure can perform the method for in-service operation and maintenance of a solid-state transformer according to any of the above embodiments, the specific implementations and technical effects of the controller 600 according to the embodiments of the present disclosure can be referred to the specific implementations and technical effects of the method for in-service operation and maintenance of a solid-state transformer according to any of the above embodiments.

In addition, an embodiment of the present disclosure further provides a solid-state transformer system, the solid-state transformer system including the circuit for in-service operation and maintenance of a solid-state transformer or the controller according to the above embodiments.

It is worth noting that since the solid-state transformer system according to the embodiments of the present disclosure includes the circuit for in-service operation and maintenance of a solid-state transformer or the controller according to the above embodiments, and the controller according to the above embodiments can perform the method for in-service operation and maintenance of a solid-state transformer according to any of the above embodiments, the specific implementations and technical effects of the solid-state transformer system according to the embodiments of the present disclosure can be referred to the specific implementations and technical effects of the circuit for in-service operation and maintenance of a solid-state transformer or the method for in-service operation and maintenance of a solid-state transformer according to any of the above embodiments.

In addition, an embodiment of the present disclosure further provides a power supply system, the power supply system including the solid-state transformer system according to the above embodiments.

It is worth noting that since the power supply system according to the embodiments of the present disclosure includes the solid-state transformer system according to the above embodiments, and the solid-state transformer system according to the above embodiments includes the circuit for in-service operation and maintenance of a solid-state transformer or the controller according to the above embodiments, and the controller according to the above embodiments can perform the method for in-service operation and maintenance of a solid-state transformer according to any of the above embodiments, the specific implementations and technical effects of the power supply system according to the embodiments of the present disclosure can be referred to the specific implementations and technical effects of the circuit for in-service operation and maintenance of a solid-state transformer or the method for in-service operation and maintenance of a solid-state transformer according to any of the above embodiments.

In addition, an embodiment of the present disclosure further provides a computer-readable storage medium, the computer-readable storage medium storing computer-executable instructions, the computer-executable instructions being used to perform the above method for in-service operation and maintenance of a solid-state transformer. Exemplarily, the method steps in FIGS. 5 to 9 described above are performed.

It is worth noting that since the computer-readable storage medium according to the embodiments of the present disclosure can perform the method for in-service operation and maintenance of a solid-state transformer according to any of the above embodiments, the specific implementations and technical effects of the computer-readable storage medium according to the embodiments of the present disclosure can be referred to the specific implementations and technical effects of the method for in-service operation and maintenance of a solid-state transformer according to any of the above embodiments.

Those of ordinary skill in the art can understand that all or some of the steps and systems of the methods disclosed above may be implemented as software, firmware, hardware and appropriate combinations thereof. Some physical components or all physical components may be implemented as software executed by a processor, such as a central processing unit, a digital signal processor or a microprocessor, or implemented as hardware, or implemented as an integrated circuit, such as an application-specific integrated circuit. Such software may be distributed on a computer-readable medium, which may include computer storage media (or non-transitory media) and communication media (or transitory media). As is known to those of ordinary skill in the art, the term computer storage media includes volatile and non-volatile, removable and non-removable media implemented in any method or technique for storage of information such as computer-readable instructions, data structures, program modules or other data. Computer storage media include, but are not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or any other medium that can be configured to store desired information and can be accessed by a computer. In addition, it is known to those of ordinary skill in the art that communication media typically includes computer-readable instructions, data structures, program modules, or other data in a modulated data signal such as a carrier wave or other transmission mechanism, and may include any information delivery media.

In addition, an embodiment of the present disclosure further provides a computer program product, including a computer program or computer instructions, wherein the computer program or the computer instructions are stored in a computer-readable storage medium, and a processor of a computer device reads the computer program or the computer instructions from the computer-readable storage medium, and executes the computer program or the computer instructions, to cause the computer device to perform the method steps in FIGS. 5 to 9 described above.

It is worth noting that since the computer program product according to the embodiments of the present disclosure can perform the method for in-service operation and maintenance of a solid-state transformer according to any of the above embodiments, the specific implementations and technical effects of the computer program product according to the embodiments of the present disclosure can be referred to the specific implementations and technical effects of the method for in-service operation and maintenance of a solid-state transformer according to any of the above embodiments.

The above is a specific description of preferred implementations of the present disclosure, but the present disclosure is not limited to the above implementations. Those skilled in the art can also make various equivalent modifications or substitutions without departing from the spirit of the present disclosure, and these equivalent modifications or substitutions are all included in the scope defined by the claims of the present disclosure.

## Claims

1. A circuit for in-service operation and maintenance of a solid-state transformer, comprising:
a solid-state transformer unit having an input side configured to be connected to an input busbar and an output side configured to be connected to an output busbar;
an input-side switch and an output-side switch, wherein the input-side switch is disposed between the input side of the solid-state transformer unit and the input busbar, and the output-side switch is disposed between the output side of the solid-state transformer unit and the output busbar; wherein a plurality of the solid-state transformer units, a plurality of the input-side switches and a plurality of the output-side switches are provided, and one solid-state transformer unit corresponds to one input-side switch and one output-side switch; and
an auxiliary charging circuit, wherein a voltage output end of the auxiliary charging circuit is connected between the solid-state transformer unit and the output-side switch, and the auxiliary charging circuit is configured to charge the solid-state transformer unit.

2. The circuit for in-service operation and maintenance of a solid-state transformer according to claim 1, wherein the auxiliary charging circuit comprises an operation-and-maintenance voltage output device and an operation-and-maintenance switch, one end of the operation-and-maintenance switch is connected to the operation-and-maintenance voltage output device, and the other end of the operation-and-maintenance switch is connected between the solid-state transformer unit and the output-side switch, wherein a plurality of the operation-and-maintenance switches are provided, and one operation-and-maintenance switch corresponds to one solid-state transformer unit.

3. The circuit for in-service operation and maintenance of a solid-state transformer according to claim 2, wherein the operation-and-maintenance voltage output device comprises a power-taking transformer and a first voltage converter, an input end of the power-taking transformer is configured to be connected to the input busbar, an output end of the power-taking transformer is connected to the plurality of operation-and-maintenance switches via the first voltage converter, and the first voltage converter is configured to convert an alternating-current voltage into a direct-current voltage.

4. The circuit for in-service operation and maintenance of a solid-state transformer according to claim 2, wherein the operation-and-maintenance voltage output device comprises a second voltage converter, an input end of the second voltage converter is configured to be connected to the output busbar, an output end of the second voltage converter is connected to the plurality of operation-and-maintenance switches, and the second voltage converter is configured to convert a voltage value of a direct-current voltage of the output busbar.

5. The circuit for in-service operation and maintenance of a solid-state transformer according to claim 4, wherein the operation-and-maintenance voltage output device further comprises an operation-and-maintenance power supply switch, one end of the operation-and-maintenance power supply switch is connected to the output busbar, and the other end of the operation-and-maintenance power supply switch is connected to the second voltage converter.

6. The circuit for in-service operation and maintenance of a solid-state transformer according to claim 2, wherein the operation-and-maintenance voltage output device comprises a power supply battery and a third voltage converter, an input end of the third voltage converter is connected to the power supply battery, an output end of the third voltage converter is connected to the plurality of operation-and-maintenance switches, and the third voltage converter is configured to convert a voltage value of a direct-current voltage of the power supply battery.

7. The circuit for in-service operation and maintenance of a solid-state transformer according to claim 6, wherein the operation-and-maintenance voltage output device further comprises an operation-and-maintenance power supply switch, one end of the operation-and-maintenance power supply switch is connected to the power supply battery, and the other end of the operation-and-maintenance power supply switch is connected to the third voltage converter.

8. The circuit for in-service operation and maintenance of a solid-state transformer according to any one of claims 2 to 7, wherein the solid-state transformer unit comprises a bridge-type isolation module, the bridge-type isolation module comprises a high-voltage-side cascade module and a low-voltage-side cascade module, the high-voltage-side cascade module is provided with a high-voltage-side capacitor, the low-voltage-side cascade module is provided with a low-voltage-side capacitor, the high-voltage-side capacitor is connected to the input-side switch, and the low-voltage-side capacitor is connected to the output-side switch and the operation-and-maintenance switch.

9. A method for in-service operation and maintenance of a solid-state transformer, applied to the circuit for in-service operation and maintenance of a solid-state transformer according to any one of claims 1 to 8, the method comprising:
receiving an operation-and-maintenance shutdown instruction, and determining a corresponding target solid-state transformer unit according to the operation-and-maintenance shutdown instruction;
opening the input-side switch and the output-side switch corresponding to the target solid-state transformer unit, to control the target solid-state transformer unit to shut down, and maintaining power supply to a load through the solid-state transformer units other than the target solid-state transformer unit; and
controlling the auxiliary charging circuit to charge the target solid-state transformer unit, closing the input-side switch and closing the output-side switch, after the target solid-state transformer unit completes operation and maintenance.

10. The method for in-service operation and maintenance of a solid-state transformer according to claim 9, wherein the auxiliary charging circuit comprises an operation-and-maintenance voltage output device and an operation-and-maintenance switch, and the operation-and-maintenance voltage output device is connected between the solid-state transformer unit and the output-side switch via the operation-and-maintenance switch; and controlling the auxiliary charging circuit to charge the target solid-state transformer unit comprises:
closing the operation-and-maintenance switch corresponding to the target solid-state transformer unit, to charge a low-voltage-side capacitor and a high-voltage-side capacitor in the target solid-state transformer unit.

11. The method for in-service operation and maintenance of a solid-state transformer according to claim 10, wherein closing the input-side switch comprises:
obtaining a voltage value of the high-voltage-side capacitor; and
in response to the voltage value of the high-voltage-side capacitor being greater than a peak voltage of a power grid, closing the input-side switch corresponding to the target solid-state transformer unit.

12. The method for in-service operation and maintenance of a solid-state transformer according to claim 11, wherein after closing the input-side switch corresponding to the target solid-state transformer unit, the method further comprises:
opening the operation-and-maintenance switch corresponding to the target solid-state transformer unit, and starting the target solid-state transformer unit.

13. The method for in-service operation and maintenance of a solid-state transformer according to claim 9, wherein closing the output-side switch comprises:
obtaining a unit output voltage at the output side of the target solid-state transformer unit and a busbar output voltage of the output busbar;
determining a voltage difference between the unit output voltage and the busbar output voltage; and
in response to the voltage difference being less than a preset threshold, closing the output-side switch corresponding to the target solid-state transformer unit.

14. A controller, comprising:
at least one processor; and
at least one memory configured to store at least one program;
wherein at least one of the programs, when executed by at least one of the processors, performs the method for in-service operation and maintenance of a solid-state transformer according to any one of claims 9 to 13.

15. A computer-readable storage medium, having a processor-executable program stored therein, wherein the processor-executable program, when executed by at least one of the processors, performs the method for in-service operation and maintenance of a solid-state transformer according to any one of claims 9 to 13.

16. A computer program product, comprising a computer program or computer instructions, wherein the computer program or the computer instructions are stored in a computer-readable storage medium, and a processor of a computer device reads the computer program or the computer instructions from the computer-readable storage medium, and the processor executes the computer program or the computer instructions, to cause the computer device to perform the method for in-service operation and maintenance of a solid-state transformer according to any one of claims 9 to 13.
